# EUROPÄISCHE PATENTSCHRIFT

(11) **EP 3 318 311 B1**
(45) Veröffentlichungstag und Bekanntmachung des Hinweises auf die Patenterteilung: **04.05.2022**
(21) Anmeldenummer: 16197654.3
(22) Anmeldetag: 08.11.2016
(51) Int. Cl.: B01D 1/00, B01D 1/22

(54) **DÜNNSCHICHTBEHANDLUNGSVORRICHTUNG**
THIN FILM TREATMENT DEVICE
DISPOSITIF DE TRAITEMENT DE COUCHE MINCE

(43) Veröffentlichungstag der Anmeldung: 09.05.2018
(73) Patentinhaber: Buss-SMS-Canzler GmbH, 35510 Butzbach (DE)
(72) Erfinder: PETERS, Hans, 79576 Weil (DE)
(74) Vertreter: Schaad, Balass, Menzl & Partner AG

(56) Entgegenhaltungen:
- JP-A- S5 781 802
- JP-A- H04 260 433
- US-A- 3 542 112
- US-A- 4 872 948
- SATORU KOMORI ET AL: "THE EFFECTS OF MULTIPLE INCLINED BLADES ON FLOW AND MIXING CHARACTERISTICS IN AN AGITATED THIN-FILM EVAPORATOR", JOURNAL OF CHEMICAL ENGINEERING OF JAPAN, SOCIETY OF CHEMICAL ENGINEERS, JP, Bd. 23, Nr. 5, 1. Oktober 1990 (1990-10-01), Seiten 550-555, XP000208451, ISSN: 0021-9592

## Beschreibung

Die Erfindung betrifft eine Dünnschichtbehandlungsvorrichtung zum Behandeln von viskosem Material.

Dünnschichtbehandlungsvorrichtungen sind dem Fachmann schon seit geraumer Zeit bekannt und werden etwa in der Destillation, der Konzentration, der Entgasung und der Trocknung von viskosem Material eingesetzt. Des Weiteren werden Dünnschichtbehandlungsvorrichtungen auch zum Mischen eingesetzt sowie für Reaktionen, bei welchen mindestens temporär ein viskoser Zustand vorliegt, insbesondere etwa für Polymerisationsreaktionen. Der Betrieb von Dünnschichtbehandlungsvorrichtungen erfolgt überwiegend kontinuierlich.

Eine Untergruppe von Dünnschichtbehandlungsvorrichtungen stellen die Dünnschichtverdampfer dar. Diese basieren auf dem Prinzip, dass mittels Verteilung von Material in einer dünnen Schicht auf der Innenfläche einer temperierbaren Gehäusewand eine hohe Wärmestromdichte erzielt werden kann, wodurch letztendlich eine grosse Verdampfungsleistung und hohe Eindampfverhältnisse in einem Durchlauf ermöglicht werden können.

Zur Verteilung des Materials können insbesondere mit Wischerelementen bestückte Rotoren vorgesehen werden; entsprechende Dünnschichtverdampfer, die zusätzlich mit einer Materialförderung ausgestattet sind, sind dem Fachmann unter der Bezeichnung Filmtruder bekannt.

Eine Dünnschichtbearbeitungsvorrichtung in Form eines Filmtruders wird etwa in der CH 523 087 beschrieben, gemäss welcher in einer heizbaren und/oder kühlbaren Behandlungskammer koaxial ein antreibbarer Rotor angeordnet ist, welcher einen Rohrkörper aufweist, auf dessen Umfang geneigte Flügel gleichmässig verteilt sind und auf dem im Übrigen axial in die Nähe der Innenfläche des Gehäusemantels reichende oder die Innenfläche berührende Wischerblätter angeordnet sind. Im Betrieb wird das zu behandelnde Material durch die in Rotation versetzten Wischerblätter erfasst und in dünner Schicht auf der Innenwand des Gehäuses verteilt, während die schräg gestellten Flügelteile dem erfassten Material eine zum Auslass hin gerichtete Bewegungskomponente erteilen.

DE 100 50 997 C1 beschreibt einen weiteren Dünnschichtverdampfer. Dabei ist in einer Heizkammer eine mit Abstreifelementen versehene Welle zum Verteilen der eingebrachten Stoffe an der Innenseite des Gehäuses angeordnet, wobei die Welle einen Lagerzapfen aufweist, der in einer Lagerbuchse gleitend gelagert ist.

Nebst den im Betrieb üblicherweise vertikal ausgerichteten Dünnschichtverdampfern sind dem Fachmann weitere Dünnschichtbearbeitungsvorrichtungen bekannt, wie etwa Dünnschichttrockner, die in der Regel horizontal ausgerichtet sind. Ein entsprechender Dünnschichttrockner wird in DE 41 17 630 beschrieben, gemäss welcher innerhalb eines Wärmetauscherrohrs jeweils ein langgestreckter Flügelrotor angeordnet ist, der das das zu trocknenden Material an die Innenumfangsfläche des Wärmetauscherrohrs befördert.

Weiter wird in der WO 2004/041420 eine Dünnschichtbehandlungsvorrichtung in Form einer horizontal angeordneten Mischvorrichtung offenbart, in der die zu mischenden Komponenten auf der Innenwand eines hohlzylindrischen Körpers in einer dünnen Schicht verteilt werden, wobei die Komponenten durch Zusammenwirken der Rotorblätter mit der Innenwand des hohlzylindrischen Körpers vermischt werden.

US 4,872,948 offenbart einen Dünnschichttrockner mit einem Trocknergefäss, welches eine röhrenförmige Wärmeoberfläche beinhaltet. Dabei wird eine Aufschlämmung mittels eines Wärmemediums erwärmt, während Blätter im Innern der Wärmeoberfläche rotieren.

Des Weiteren offenbart US 3,542,112 einen horizontal ausgerichteten Dünnschichtverdampfer mit einer Kammer und einer in der Kammer angeordneten Rotorwelle. Die Kammer ist von einem temperaturgeregelten Mantel umgeben und in zwei Zonen aufgeteilt, einer ersten Zone, in welcher der Mantel einen ersten Einlass zum Einführen eines ersten Wärmeträgermediums und einen ersten Auslass zum Abführen desselben aufweist, und einer zweiten Zone, in welcher der Mantel einen zweiten Einlass zum Einführen eines zweiten Wärmeträgermediums und einen zweiten Auslass zum Abführen desselben aufweist. Diesen Zonen ist jeweils ein Temperaturbestimmungsmittel zugeordnet.

Ferner offenbart JP H04 260433 eine Dünnschichtbehandlungsvorrichtung wobei Temperatursensoren an der Rotorwelle angeordnet sind.

Wie erwähnt sind Dünnschichtbehandlungsvorrichtungen auf die Behandlung von viskosem Material ausgelegt. Gerade bei temperaturempfindlichen Materialien stellt sich diesbezüglich allerdings das Problem, dass aufgrund der relativ hohen Viskosität über die Rotorwelle eine relativ hohe Menge an Dissipationsenergie in das Material eingetragen wird. Zusammen mit der über den Gehäusemantel eingetragenen Wärme kann dies dazu führen, dass die thermische Belastung zu hoch werden und das Material dadurch Schaden erleiden kann. Im Interesse eines hohen Materialdurchsatzes soll demgegenüber aber die Prozesswärme möglichst hoch gehalten werden. So soll etwa im Falle eines Dünnschichtverdampfers die Prozesswärme möglichst hoch gehalten werden, um eine möglichst hohe Verdampfungsleistung zu gewährleisten. Zudem soll durch die hohe Prozesswärme ein grosser Diffusionskoeffizient erhalten werden, um den Stofftransport zu begünstigen.

Die erfindungsgemäss zu lösende Aufgabe liegt somit darin, eine Dünnschichtbehandlungsvorrichtung zur Verfügung zu stellen, welche eine optimierte Prozessführung ermöglicht. Insbesondere soll mittels der Dünnschichtbehandlungsvorrichtung die Prozesswärme möglichst hoch gehalten, gleichzeitig aber eine Überhitzung des zu behandelnden Materials zuverlässig verhindert werden können. Im Übrigen sollen mittels der Dünnschichtbehandlungsvorrichtung sich abzeichnende Prozessstörungen frühzeitig erkannt werden können, um korrigierend einzugreifen und die Prozessführung derart zu optimieren.

Die Aufgabe wird gelöst durch die Dünnschichtbehandlungsvorrichtung gemäss dem unabhängigen Anspruch 1. Bevorzugte Ausführungsformen sind in den abhängigen Ansprüchen wiedergegeben.

Gemäss Anspruch 1 ist die erfindungsgemässe Dünnschichtbehandlungsvorrichtung zum Behandeln von viskosem Material ausgelegt und umfasst ein Gehäuse mit einem beheizbaren und/oder kühlbaren Gehäusemantel, welcher eine sich in axialer Richtung erstreckende rotationssymmetrische Behandlungskammer umschliesst. Die Behandlungskammer entspricht somit dem Gehäuseinnenraum, in welchem das Material der entsprechenden Behandlung, also insbesondere der Destillation, der Konzentration, der Entgasung, der Trocknung und/oder der Reaktion von im Material enthaltenen Stoffkomponenten, unterzogen wird. Sie ist in der Regel zylindrisch ausgestaltet, wobei aber denkbar oder bevorzugt ist, dass sie im auslassseitigen Endbereich konisch verjüngt ausgestaltet ist.

Die Dünnschichtbehandlungsvorrichtung umfasst weiter einen in einem Einlassbereich des Gehäuses angeordneten Einlassstutzen zum Einführen des zu behandelnden Materials in die Behandlungskammer und einen in einem Auslassbereich des Gehäuses angeordneten Auslassstutzen zum Austragen des Materials aus der Behandlungskammer. In der Regel ist zum Austragen im auslassseitigen Endbereich des Gehäuses eine Austragspumpe angeordnet, vorzugsweise eine Zahnradpumpe. In der Behandlungskammer der Dünnschichtbehandlungsvorrichtung ist eine sich koaxial erstreckende, antreibbare Rotorwelle zur Erzeugung eines Materialfilms auf der Innenfläche des Gehäusemantels und zur Förderung des Materials in Richtung vom Einlassbereich zum Auslassbereich hin angeordnet, wobei die Rotorwelle einen zentralen Rotorwellenkörper und auf dessen Umfang angeordnete Rotorblätter umfasst, deren radial äusserstes Ende von der Innenfläche des Gehäusemantels beabstandet ist.

Erfindungsgemäss sind in der Behandlungskammer mehr als zwei Temperatursensoren zur Messung der Temperatur des Materialfilms angeordnet.

Wie weiter unten im Zusammenhang mit dem entsprechenden Verfahren beschrieben wird, erlaubt es die erfindungsgemässe Dünnschichtbehandlungsvorrichtung somit, die Temperatur des Materialfilms lokal zu bestimmen und aufgrund der bestimmten Temperatur bzw. des bestimmten Temperaturprofils mindestens einen Prozessparameter einzustellen. Insbesondere kann die Temperierung des Gehäusemantels gezielt geregelt werden, um die Prozesswärme lokal auf den gewünschten Wert einzustellen, welcher im Falle einer Dünnschichtverdampfung typischerweise hoch genug ist, um eine hohe Verdampfungsleistung zu gewährleisten, und tief genug, um eine kritische Temperatur, ab der eine thermisch bedingte Schädigung des zu behandelnden Materials eintreten kann, nicht zu überschreiten.

Zur Einstellung der gewünschten Prozesswärme kann der Gehäusemantel mittels eines vorgewärmten Wärmeträgermediums beheizt oder gekühlt werden. Alternativ oder zusätzlich kann die Einstellung der Prozesswärme auch über die Geometrie und/oder die Drehgeschwindigkeit der Rotorwelle geregelt werden.

Letztendlich erlaubt es die vorliegende Erfindung somit, einen stabilen und reproduzierbaren Betrieb sicherzustellen und die Herstellung von qualitativ hochwertigen Produkten zu ermöglichen.

Wie erwähnt ist die Dünnschichtbehandlungsvorrichtung insbesondere auf die Behandlung von viskosem Material ausgelegt. Unter "viskosem Material" wird im Sinne der vorliegenden Erfindung typischerweise ein Material mit einer Viskosität im Bereich von 1 bis 50'000 Pa·s, insbesondere von 50 bis 15'000 Pa·s verstanden. Vorzugsweise weist das erfindungsgemäss zu behandelnde Material mindestens temporär eine Viskosität von mehr als 100 Pa·s, bevorzugter mehr als 500 Pa·s, am bevorzugtesten mehr als 1000 Pa·s auf, da ab dieser Viskosität die Dissipationsphänomene stark zunehmen und die Vorteile der Erfindung besonders stark zu Tage treten. Die Bestimmung der Viskosität kann z.B. mit einem Rotationsviskosimeter gemäss DIN ISO 1652:2013-02 bei der jeweiligen Temperatur des Materials erfolgen.

Selbstverständlich sind in der vorliegenden Erfindung Dünnschichtbehandlungsvorrichtungen miteingeschlossen, bei denen das zu behandelnde Material lediglich zeitweise viskos vorliegt. Somit sind auch Dünnschichtbehandlungsvorrichtungen umfasst, in denen das Material während der Behandlung in einen festen, granulierfähigen bzw. rieselfähigen Zustand umbricht. Vorzugsweise ist die Dünnschichtbehandlungsvorrichtung zur thermischen Auftrennung eines Stoffgemischs ausgelegt und liegt insbesondere in Form eines Dünnschichtverdampfers, eines Dünnschichttrockners oder eines Dünnschichtreaktors vor. Typischerweise weist die Dünnschichtbehandlungsvorrichtung bzw. der Dünnschichtverdampfer, Dünnschichttrockner oder Dünnschichtreaktor einen Brüdenstutzen auf, durch welchen die abgetrennten leichtflüchtigen Stoffkomponenten aus der Behandlungskammer abgezogen werden können.

Wie weiter unten ausgeführt wird, liegen je nach Material und je nach konkreter Art der Behandlung des Materials unterschiedliche Temperaturverläufe im Dünnschichtverdampfer vor. So sind zum einen Prozesse denkbar, bei denen das Temperaturmaximum unmittelbar vor dem Materialauslass des Dünnschichtverdampfers vorliegt, während andererseits Prozesse denkbar sind, bei denen die Temperatur nach dem Materialeinlass vorerst zunimmt, ab einem bestimmten Punkt aber zum Materialauslass hin wieder abnimmt, wie es etwa bei Prozessen, bei denen eine Entspannungsverdampfung oder ein Phasenumbruch vorliegt, vorkommen kann.

Um den Temperaturverlauf ausreichend genau zu ermitteln, liegen mehr als zwei Temperatursensoren vor, welche über die Länge der Behandlungskammer, d.h. über die vom Material in axialer Richtung zurückzulegende Strecke, verteilt angeordnet sind.

Gemäss der Erfindung ist mindestens ein Teil der Temperatursensoren an der Rotorwelle, vorzugsweise am zentralen Rotorwellenkörper angeordnet. Gegenüber einer Anordnung des Temperatursensors am Gehäusemantel weist diese Ausführungsform den Vorteil auf, dass die Bestimmung der Temperatur von der Wärmestrahlung des Gehäusemantels, welche die Temperaturbestimmung des Materialfilms verfälschen könnte, entkoppelt wird. Somit kann gemäss dieser Ausführungsform die Temperatur des Materialfilms bzw. die zwischen einzelnen Zonen vorliegenden Temperaturdifferenzen des Materialfilms sehr genau bestimmt werden, was letztendlich eine optimale Regelung des in der Dünnschichtbehandlungsvorrichtung ablaufenden Prozess erlaubt. Zudem weist diese Ausführungsform den Vorteil auf, dass keine apparativen Anpassungen am Gehäusemantel vorgenommen werden müssen. Insbesondere sind keine Ausnehmungen an der Innenfläche der Gehäusemantelwand anzubringen, wie sie etwa dann notwendig wären, wenn die Temperatursensoren an der Gehäusemantelwand angeordnet sind und somit bezüglich der Innenfläche nach hinten versetzt werden müssen, um eine gleichmässige Innenfläche zu gewährleisten. Zudem sind gemäss der obigen bevorzugten Ausführungsform die Temperatursensoren nicht durch den von Wärmeträgermedium durchströmten Raum zu führen, in welchem somit auch die Temperatursensorhalterung von Wärmeträgermedium umspült würde.

Dabei ist weiter bevorzugt, dass mindestens ein Teil der Temperatursensoren in einem Bereich der Rotorwelle angeordnet ist, an welchem sie während des Betriebs der Dünnschichtbehandlungsvorrichtung in direktem Kontakt mit dem Materialfilm stehen. Gemäss der Erfindung ist mindestens ein Teil der Temperatursensoren derart an der Rotorwelle angeordnet, dass der die Temperatur abgreifende temperaturfühlende Abschnitt des Temperatursensors im Bereich des radial äussersten Endes der Rotorwelle angeordnet ist, um einen permanenten Materialkontakt der Temperatursensoren zu gewährleisten. Dabei ist das radial äusserste Ende in der Regel von 0,5 mm bis 12 mm, vorzugsweise von 1 mm bis 4 mm, von der Innenfläche des Gehäusemantels beabstandet. Denkbar ist insbesondere eine Anordnung, mit welcher die Temperatur in der vor einem Rotorblatt entstehenden Bugwelle des Materialfilms abgegriffen werden kann. Gemäss einer besonders bevorzugten Ausführungsform ist somit der temperaturfühlende Abschnitt des Temperatursensors auf der Bugseite eines Rotorblatts angeordnet, d.h. auf dem in Drehrichtung betrachtet stromabwärtsliegenden Bereich.

Die obige Ausführungsform, gemäss welcher mindestens ein Teil der Temperatursensoren während des Betriebs der Dünnschichtbehandlungsvorrichtung in direktem Kontakt mit dem Materialfilm stehen, umfasst Ausführungsformen, in welchen dieser direkte Kontakt nicht durchgehend besteht. In diesem Zusammenhang ist anzumerken, dass die obige Ausführungsform gerade für die Behandlung von Materialien von besonderem Vorteil ist, welche während der Behandlung in einen rieselfähiqen Zustand umbrechen. Für diese Materialien ist in der in der Regel horizontal ausgerichteten Dünnschichtbehandlungsvorrichtung eine durchgängige Benetzung der Innenfläche nur bei hohen Froude-Zahlen, wie z.B. 40 oder höher, zu erreichen. Mittels der während des Betriebs der Dünnschichtbehandlungsvorrichtung in direktem Kontakt mit dem Materialfilm stehenden Temperatursensoren kann somit auch eine Aussage über die Benetzung der Innenfläche getroffen werden.

Vom Begriff "Rotorblatt", wie er im Zusammenhang mit der vorliegenden Erfindung verwendet wird, sind sowohl Wischerblätter umfasst, wie sie etwa in der CH 523 087 beschrieben werden und welchen die primäre Funktion zukommt, einen Materialfilm zu erzeugen, als auch die Förderblätter, welche die primäre Funktion haben, dem Material eine in Richtung zum Austragsstutzen hin gerichtete Bewegungskomponente zu erteilen. Hierzu sind in der Regel mehrere um 5° bis 90°, bevorzugter um 20° bis 90° versetzt angeordnete Förderblätter vorgesehen, welche jeweils ein sich axial erstreckendes Rotorblatt und am radialen Aussenrand des Rotorblatts angeordnete, schräg angeordnete Flügelteile aufweisen. Vom Begriff "Rotorblatt" sind aber insbesondere auch Wischerblattelemente umfasst, die in axialer Richtung aufeinanderfolgend angeordnet sind. Typischerweise ist dabei eine Anzahl an axial verlaufenden Wischerblattelementreihen in Umfangsrichtung z.B. um 90° versetzt zueinander angeordnet.

Gemäss einer besonders bevorzugten Ausführungsform liegt mindestens ein Teil der Rotorblätter in Form von Wischerblattelementen vor, die mindestens in ihrem der Innenfläche des Gehäusemantels zugewandten Randbereich einen Anstellwinkel in Bezug zur Rotorachse ausbilden. Diese Wischerblattelemente sind somit derart ausgestaltet, einen Materialfilm auf der Innenfläche der Gehäusemantelwand zu erzeugen und dem Material gleichzeitig eine Bewegungskomponente zum Austragsstutzen hin zu erteilen. Wie erwähnt wird die Temperatur der Bugwelle des Materialfilms abgegriffen und ist der temperaturfühlende Abschnitt des Temperatursensors vorzugsweise auf der Bugseite des Wischerblattelements angeordnet , wie im Übrigen im Zusammenhang mit den Figuren detailliert beschrieben wird. Diesbezüglich ist weiter bevorzugt, dass ein am Rotorwellenkörper angeordnetes Temperatursensorelement mit einem radial zum Rotorwellenkörper verlaufenden Abschnitt durch ein sich auf entsprechender Höhe befindendes Wischerblattelement hindurchgeführt ist, damit der temperaturfühlende Abschnitt des Temperatursensors auf der Bugseite des Wischerblattelements zu liegen kommt, wie ebenfalls im Rahmen der Figurenbeschreibung ausgeführt wird.

Denkbar ist aber auch, dass die Temperatursensoren in Form von berührungslos messenden Temperatursensoren vorliegen. Dies kann insbesondere dann vorteilhaft sein, wenn ein direkter Kontakt der Temperatursensoren mit dem Materialfilm vermieden werden soll.

Konkret kann der Temperatursensor somit als thermoresistiver Temperatursensor, Thermoelement, Pyrometer und/oder Infrarotsensor vorliegen. Da wie erwähnt der Temperatursensor vorzugsweise an der Rotorwelle angeordnet ist und nicht durch den beheizten Gehäusemantel hindurchgeführt wird, ist eine Isolierung des temperaturfühlenden Abschnitts gegenüber störender bzw. das Messresultat verfälschender Wärmestrahlung nicht erforderlich, um eine genaue Messung zu gewährleisten. Somit können gemäss dieser Ausführungsform auch mit einfachen und somit kostengünstigen Temperatursensoren sehr genaue Messresultate erzielt werden.

In der Regel ist dem mindestens einen Temperatursensor eine Signalleitung zugeordnet zur Leitung des mit dem Temperatursensor ermittelten Signals zu einer externen Signalverarbeitungsvorrichtung. Mit dieser etwa in Form eines Kabels vorliegenden Signalleitung wird das Signal somit von der Behandlungskammer nach aussen geleitet, wo es ausgewertet werden kann und von wo aus aufgrund der Auswertung die notwendigen Einstellungen vorgenommen werden können.

Hinsichtlich der oben beschriebenen Ausführungsform, in welcher mindestens ein Teil der Temperatursensoren an der Rotorwelle angeordnet ist, ist weiter bevorzugt, dass die Signalleitung mindestens teilweise durch einen sich axial erstreckenden Signalleitungsanal im Rotorwellenkörper hindurchgeführt ist. Somit erlaubt es die Anordnung der Temperatursensoren an der Rotorwelle, auf apparative Anpassungen des Gehäuses zu verzichten. Insbesondere sind keine Ausnehmungen in der Gehäusewand vorzusehen, die etwa bei einer Führung der Signalleitung durch die Gehäusewand notwendig sind. Denkbar ist etwa, dass das durch den Rotorwellenkörper geleitete Signal einer ausserhalb der Behandlungskammer angeordneten Schleifringanordnung auf der Rotorwelle zugeführt, dort abgegriffen und - in der Regel über einen Verstärker - einer Auswerteeinheit zugeführt wird.

Weiter ist denkbar, dass - nebst dem Signalleitungskanal - im Rotorwellenkörper ein weiterer sich axial erstreckender Kanal zum Einführen eines Stoffes, insbesondere eines Schleppmittels, vorgesehen ist. Besagtes Schleppmittel wird vorzugsweise zum Strippen eingesetzt; konkret kann es sich dabei etwa um ein Inertgas wie z.B. Stickstoff handeln. Dieser zusätzliche Kanal verläuft in der Regel parallel zum Signalleitungskanal. Gemäss dieser Ausführungsform ist somit ein Einführen des Schleppmittels durch die beheizte Gehäusemantelwand nicht erforderlich; eine Beeinträchtigung der Materialförderung, wie sie sich bei Stoffdurchführungen durch die Gehäusemantelwand ergeben kann, kann somit gemäss dieser Ausführungsform vermieden werden.

Wie erwähnt ist der Gehäusemantel beheizbar und/oder kühlbar ausgestaltet. In der Regel ist dazu im Innern des Gehäusemantels ein Gehäusemantelhohlraum ausgebildet, welcher dazu bestimmt sind, zum Zwecke der Beheizung und/oder Kühlung von einem Wärmeträgermedium durchströmt zu werden. Diesbezüglich bevorzugt ist, dass die Gehäusemantelwand doppelwandig ausgestaltet ist und der Zwischenraum zwischen Gehäusemantelinnenwand und Gehäusemantelauswand dazu bestimmt ist, vom Wärmeträgermedium durchströmt zu werden. Vorzugsweise ist hierfür im Hohlraum eine Leitspirale für die Leitung des Wärmeträgermediums angeordnet, da damit eine sehr hohe Heiz- bzw. Kühlleistung erzielt werden kann.

Um auf die lokale Prozesswärme in der Dünnschichtbehandlungsvorrichtung gezielt einwirken zu können, ist weiter bevorzugt, dass der Gehäusemantel mindestens zwei Gehäusemantelsegmente umfasst, welche derart ausgestaltet sind, um unabhängig voneinander beheizt und/oder gekühlt zu werden. Gemäss dieser Ausführungsform sind vorzugsweise jedem Gehäusemantelsegment jeweils ein separates Wärmeträgerkreislaufsystem mit separatem Wärmeträgereinlass und separatem Wärmeträgerauslass zugeordnet.

Dabei ist weiter bevorzugt, dass die Gehäusemantelsegmente jeweils eine entsprechende Behandlungskammerzone umschliessen und die Temperatursensoren auf verschiedene Behandlungskammerzonen verteilt sind. Idealerweise wird die Behandlungskammer somit im Hinblick auf die Anordnung der Temperatursensoren und der Gehäusemantelsegmente vorab in unterschiedliche Behandlungskammerzonen eingeteilt, in denen im Vergleich zur vorhergehenden Behandlungskammerzone eine relativ starke Änderung in der Zusammensetzung bzw. in der Viskosität des Materials erwartet wird. Besonders bevorzugt werden dabei in jenen Behandlungskammerzonen, in denen aufgrund des erwarteten Viskositätsanstiegs auch ein relativ hoher Eintrag an Dissipationsenergie erwartet wird, mehrere Temperatursensoren angeordnet, um gerade in diesen Behandlungskammerzonen die Temperatur in relativ hoher Auflösung zu überwachen und letztendlich das Überschreiten einer kritischen Temperatur zuverlässig zu vermeiden. Dies ist insbesondere im auslassseitigen Endbereich der Behandlungskammer der Fall. Selbstverständlich kann durch die erfindungsgemäss ermöglichte hochaufgelöste Überwachung der Temperatur auch ein Unterschreiten einer kritischen Temperatur vermieden werden, wo dies auftreten könnte.

Gemäss einer weiteren bevorzugten Ausführungsform ist mindestens in einem derjenigen Bereiche der Dünnschichtbehandlungsvorrichtung, in denen mehr als zwei Temperatursensoren angeordnet sind, ein Wärmeträgertemperatursensor im entsprechenden Bereich des Gehäusemantels angeordnet. Dieser Wärmeträgertemperatursensor ragt dabei mit seinem temperaturfühlenden Abschnitt in den Gehäusemantelhohlraum bzw. die darin angeordnete Leitspirale und ist dazu bestimmt, die lokal vorliegende Temperatur des Wärmeträgermediums zu bestimmen und zwar mindestens annährend auf derjenigen Höhe, auf der der entsprechende Temperatursensor in der Behandlungskammer angeordnet ist. Dadurch kann die Temperierung des Gehäusemantels noch präziser und schneller geregelt werden, als wenn die Temperatur des Wärmeträgermediums lediglich beim Austritt aus dem entsprechenden Gehäusemantelsegment bestimmt wird. Wie erwähnt kann die erfindungsgemässe Dünnschichtbehandlungsvorrichtung somit besonders vorteilhaft für ein Verfahren zur optimierten Führung eines in der Dünnschichtbehandlungsvorrichtung ablaufenden Prozesses eingesetzt werden.

Gemäss diesem Verfahren wird das zu behandelnde Material über den Einlassstutzen in die Behandlungskammer eingeführt, mittels der Rotorwelle ein Materialfilm auf der Innenfläche des Gehäusemantels erzeugt und das Material in Richtung zum Auslassbereich hin gefördert.

Dabei wird die Temperatur des Materialfilms an mehr als zwei Stellen in der Dünnschichtbehandlungsvorrichtung bestimmt, der derart bestimmte Wert mit einem Sollwert verglichen und abhängig von der Abweichung vom Sollwert mindestens ein Prozessparameter geregelt wird.

Als Prozessparameter wird gemäss einer spezifischen Ausführungsform die an der entsprechenden Stelle in das Material einzutragende bzw. abzuführende Wärmemenge geregelt.

Vorzugsweise wird die in das Material einzutragende bzw. abzuführende Wärmemenge mindestens teilweise über die in den Gehäusemantel einzutragende bzw. abzuführende Wärmemenge geregelt. Dies erfolgt vorzugsweise über Regelung der Temperatur des Wärmeträgermediums, welches zur Beheizung bzw. zur Kühlung der Gehäusemantelwand eingesetzt wird.

Alternativ oder zusätzlich dazu kann die in das Material einzutragende Wärmemenge über die Drehgeschwindigkeit der Rotorwelle geregelt werden, da mit Erhöhung der Drehgeschwindigkeit auch die Dissipationswärme zunimmt, wie oben beschrieben wurde. Weiter ist denkbar, den Dissipationsenergie-Eintrag über die Geometrie der Rotorwelle einzustellen. Diesbezüglich ist insbesondere denkbar, in denjenigen Bereichen, in denen das Material eine hohe Viskosität aufweist, die Anzahl der Rotorblattelemente bzw. die von diesen ausgeübten Scherkräfte gegenüber denjenigen Bereichen zu vermindern, in denen das Material eine tiefere Viskosität aufweist.

Bei einer Polymerisation bzw. bei der damit einhergehenden Abtrennung von überschüssigem Monomer erfolgt die Regelung des oder der Prozessparameter(s) konkret unter Berücksichtigung der folgenden geltenden Wirkzusammenhänge:
So steigt die Viskosität des polymeren Materials, wenn
- das Molekulargewicht des Materials zunimmt,
- die Temperatur des Materials abnimmt,
- der Gehalt an flüchtigen Bestandteilen abnimmt, und/oder
- die Scherrate abnimmt.

Mit steigender Viskosität nimmt auch die Dissipationsenergie zu. Weiter steigt die Dissipationsenergie, wenn die Drehzahl der Rotorwelle erhöht wird.

Bei niedrigviskosem Material, d.h. in einer Anfangsphase z.B. einer Entgasung oder einer Polykondensation, wird somit die Prozesswärme überwiegend durch Wärmeleitung vom Gehäusemantel auf das Material bestimmt, während bei hochviskosem Material, d.h. bei fortgeschrittener Entgasung bzw. Polykondensation, die durch Dissipation eingetragene Wärmeenergie überwiegt. Dies führt je nach Material und je nach Behandlung zu unterschiedlichen Temperaturverläufen im Dünnschichtverdampfer. So ist zum einen denkbar, dass bei einem ersten Material das Temperaturmaximum erst im Bereich des Materialauslasses erhalten wird, was etwa bei Polykondensationsprozessen oder radikalischen oder ionischen Polymerisationsprozessen der Fall ist, bei denen die Viskosität überwiegend über das (während des Prozesses ansteigende) Molekulargewicht bestimmt wird und die im Übrigen in der Regel exotherm ablaufen. Zum anderen ist aber auch denkbar, dass die Temperatur nach dem Materialeinlass vorerst zunimmt, ab einem bestimmten Punkt aber zum Materialauslass hin wieder abnimmt. Dies kann etwa dann auftreten, wenn der Viskositätsanstieg durch abnehmenden Gehalt an flüchtigen Bestandteilen stärker ausgeprägt ist, als die Viskositätsminderung durch Erwärmung.

Aufgrund des Umstands, dass der erfindungsgemässe Dünnschichtverdampfer eine sehr schonende Behandlung ermöglicht, ist er gerade für die Polymerisation, insbesondere für die Polykondensation oder die radikalische oder ionische Polymerisation, besonders gut geeignet. Probleme, die sich dabei ergeben können, dass eine kritische Temperatur des Polymers überschritten wird, können somit erfindungsgemäss wirksam vermieden werden. Konkret erlaubt es die vorliegende Erfindung somit, eine Verfärbung des Polymers, eine unerwünschte Gelbildung sowie die Bildung von Stippen ("black specks") zuverlässig zu umgehen.

Da radikalische oder ionische, insbesondere anionische Polymerisationsprozesse in der Regel besonders stark exotherm ablaufen, ist die Eignung des erfindungsgemässen Dünnschichtverdampfers für diese Polymerisationsprozesse besonders hoch. Die Exothermie ist bei diesen Polymerisationsprozessen in der Regel in der Anfangsphase besonders hoch, worauf sich aufgrund des erreichten höheren Umsatzes eine Phase anschliesst, in welcher ein relativ hoher Wärmeeintrag durch Dissipation erfolgt. Gerade die oben beschriebene Ausführungsform, in welcher mindestens ein Teil der Temperatursensoren während des Betriebs der Dünnschichtbehandlungsvorrichtung in direktem Kontakt mit dem Materialfilm stehen, ist für diese Prozesse besonders vorteilhaft, weil eine rasche Temperaturregelung bzw. Temperatursteuerung von besonderem Interesse ist, sei es mittels Kühlung über die Gehäusewand oder durch Zugabe von Destillat und/oder anderen Kühlflüssigkeiten.

Die erfindungsgemässen Vorteile fallen insbesondere bei der Herstellung bzw. der Behandlung von biologisch abbaubare Stoffen ins Gewicht und in besonderem Masse von Polymeren auf der Basis von nachwachsenden Rohstoffen. Eine weitere Klasse an Stoffen, für welche der erfindungsgemässe Dünnschichtverdampfer besonders vorteilhaft ist, betrifft Kleb-, Dicht- und/oder Beschichtungsstoffe, insbesondere solche, die UVinduziert, wärmeinduziert und/oder druckaktiviert aushärten.

So kann das oben beschriebene Verfahren etwa im Polymerisationsprozessen zur Abtrennung von überschüssigen Monomeren eingesetzt werden. Idealerweise wird das derart abgetrennte leichtflüchtige Monomer aufbereitet und wieder in den in der Behandlungskammer ablaufendenden Polymerisationsprozess wieder eingespeist.

Die Erfindung wird anhand der anliegenden Figuren weiter illustriert.

Es zeigt:
- Fig. 1: eine schematische Darstellung einer erfindungsgemässen Dünnschichtbehandlungsvorrichtung in Form eines Dünnschichtverdampfers;
- Fig. 2: eine Seitenansicht einer Rotorwelle der in Fig. 1 gezeigten Dünnschichtbehandlungsvorrichtung;

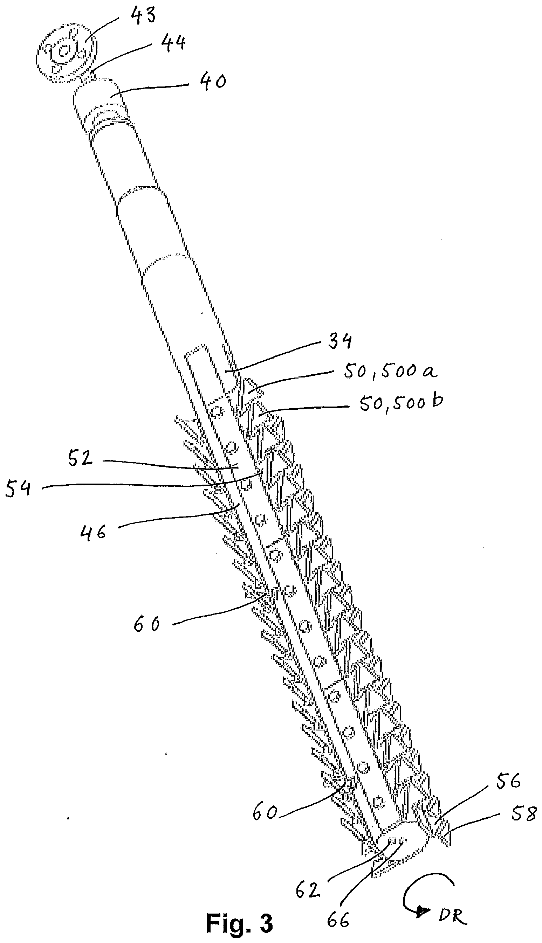

- Fig. 3: eine perspektivische Ansicht eines Teils der in Fig. 2 gezeigten Rotorwelle;

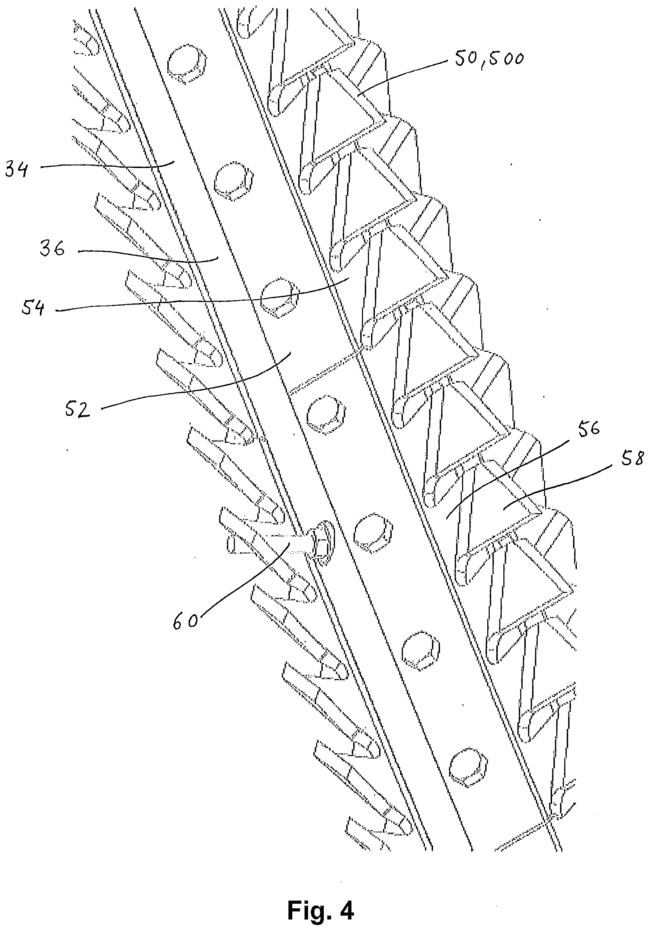

- Fig. 4: eine Detailansicht eines auf der Rotorwelle gemäss Fig. 3 angeordneten Temperatursensors;

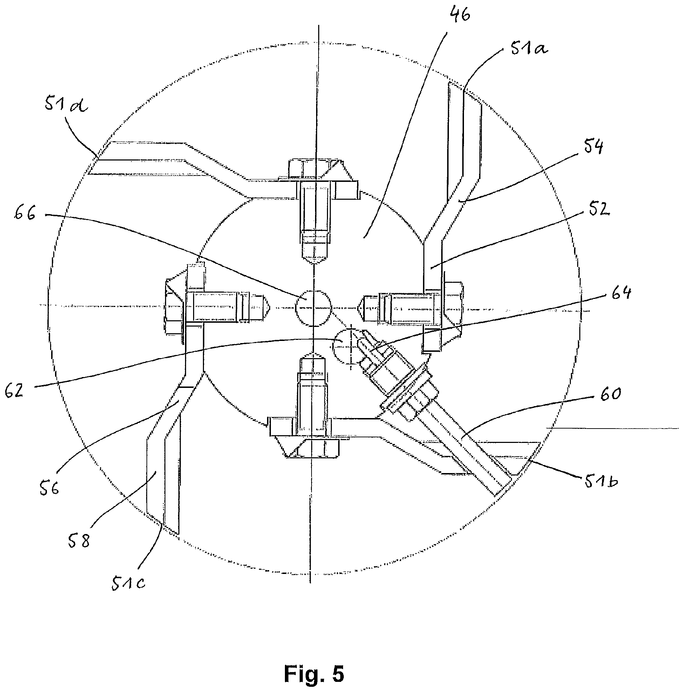

- Fig. 5: die in Fig. 3 gezeigte Rotorwelle im Querschnitt;
- Fig. 6: einen Teil der in Fig. 3 gezeigten Rotorwelle im axialen Längsschnitt;
- Fig. 7: eine schematische Darstellung der der Rotorwelle zugeordneten Schleifringläuferanordnung; und
- Fig. 8: drei exemplarische, mittels der Dünnschichtbehandlungsvorrichtung gemäss der vorliegenden Erfindung ermittelbare Temperaturverläufe.

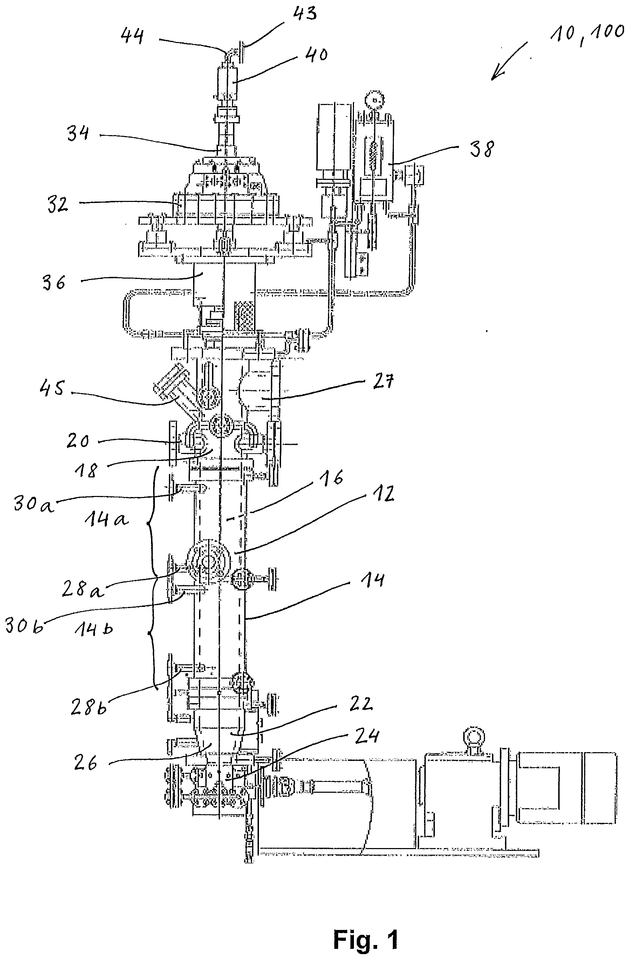

Die in Fig. 1 gezeigte Dünnschichtbehandlungsvorrichtung 10 in Form eines Dünnschichtverdampfers 100 weist ein Gehäuse 12 auf mit einem Gehäusemantel 14, welcher eine sich in axialer Richtung erstreckende Behandlungskammer 16 umschliesst. In einem oberen Einlassbereich 18 des Gehäuses 12 ist ein Einlassstutzen 20 zum Einführen des Materials in die Behandlungskammer 16 angeordnet, während in einem unteren Auslassbereich 22 des Gehäuses 12 ein Auslassstutzen 24 zum Austragen des Materials aus der Behandlungskammer 16 angeordnet ist.

Der Gehäusemantel 14 ist einlassseitig zylinderförmig ausgebildet; entsprechend weist auch die vom Gehäusemantel 14 umschlossene Behandlungskammer 16 in diesem Bereich eine zylindrische Form auf. Auslassseitig verjüngt sich der Gehäusemantel 14 konisch zum Auslass hin, wobei am Auslass des dadurch gebildeten Austragskonus 26 eine Austragspumpe angeordnet ist.

Im Gehäusemantel ist im Übrigen ein Brüdenstutzen 27 angeordnet, über welchen leichtflüchtige Bestandteile aus der Behandlungskammer 16 abgezogen werden können.

Der Gehäusemantel 14 ist doppelwandig ausgebildet, weist also eine Gehäusemantelinnenwand und eine Gehäusemantelaussenwand mit einem dazwischenliegenden Zwischenraum auf, in dem eine Leitspirale zur Leitung eines Wärmeträgermediums, typischerweise eines Thermoöls oder Thermalöls, angeordnet ist. In der gezeigten Ausführungsform liegen zwei Gehäusemantelsegmente 14a, 14b vor, denen jeweils ein separater Wärmeträgerkreislauf mit jeweils einem mit der entsprechenden Leitspirale strömungsverbundenen Wärmeträgereinlass 28a, 28b und einem Wärmeträgerauslass 30a, 30b zugeordnet sind und die somit unabhängig voneinander temperierbar sind. Hierzu ist dem jeweiligen Wärmeträgerkreislauf im Übrigen ein separates Heizelement und Kühlelement zur Temperierung des Wärmeträgermediums zugeordnet, von wo aus es über eine Wärmeträgerpumpe über den Wärmeträgereinlass 28a bzw. 28b in den in der Gehäusemantelwand ausgebildeten Hohlraum bzw. in die Leitspirale eingeführt wird.

Dem Einlassstutzen 20 kann im Übrigen eine Mischvorrichtung (nicht gezeigt) wie etwa ein statischer Mischer vorgeschaltet sein. Über diesen können dem zu behandelnden Material weitere Komponenten wie z.B. Desaktivatoren, Additive, Stabilisatoren oder Mischungen und Kombinationen davon hinzugefügt werden.

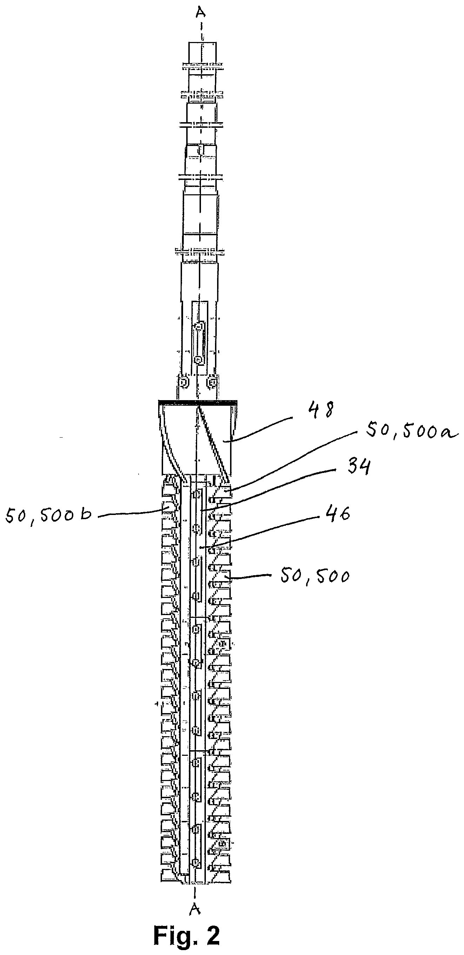

Wie im Zusammenhang mit der Fig. 2 weiter ausgeführt wird, ist in der Behandlungskammer 16 eine sich koaxial erstreckende, über einen Hydraulikantrieb 32 antreibbare Rotorwelle 34 zur Erzeugung eines Materialfilms auf der Innenfläche des Gehäusemantels 14 und zur Förderung des Materials in Richtung vom Einlassbereich 18 zum Auslassbereich 22 hin angeordnet. Nebst dem gezeigten Hydraulikantrieb sind dafür auch elektrische Antriebe denkbar.

Die Rotorwelle ist in der gezeigten Ausführungsform durch den Hydraulikantrieb 32 hindurch geführt. Zwischen Hydraulikantrieb 32 und dem die Behandlungskammer 16 umschliessenden Gehäusemantel 14 ist eine Laterne 36 angeordnet, welche zur Schmierung von Gleitringdichtungen mit einem Hilfsaggregat 38 verbunden ist.

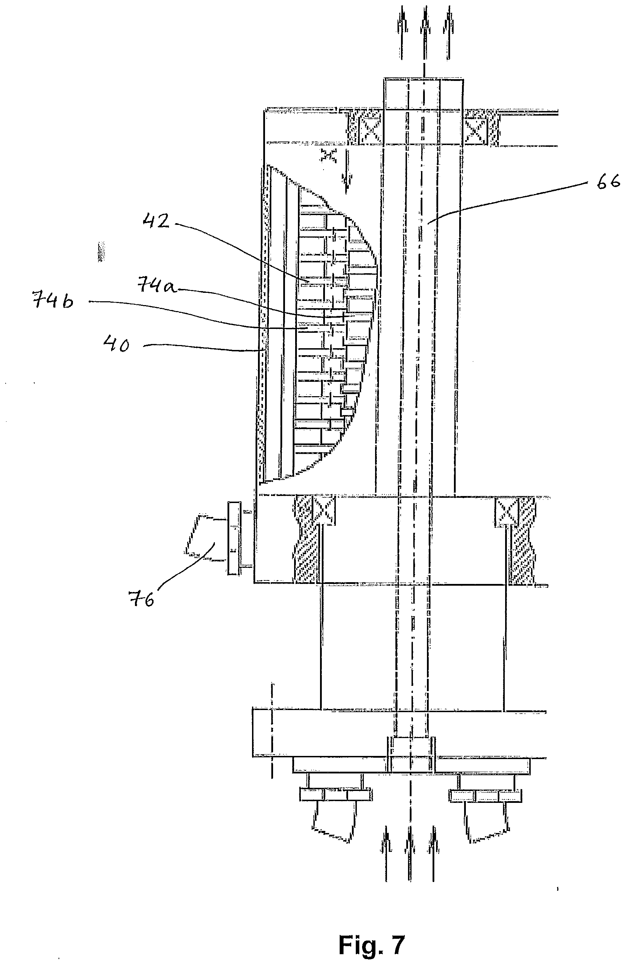

Auf der dem Gehäuse 12 abgewandten Seite des Hydraulikantriebs 32 ist die Rotorwelle 34 in einer Statorbuchse 40 gelagert, welche eine Schleifringanordnung 42 umfasst, auf die im Zusammenhang mit Fig. 7 weiter eingegangen wird. Am obersten Ende ist zudem eine Schleppmittelzuleitung 44 zum Einführen eines Schleppmittels angeordnet.

Zudem ist im Gehäusemantel 14 ein Schauglas 45 eingelassen, welches es erlauben soll, in das Innere des Gehäuses bzw. in die Behandlungskammer Einsicht zu nehmen.

Wie etwa in Fig. 2 gezeigt ist, umfasst die Rotorwelle 34 einen zentralen Rotorwellenkörper 46, welcher in der gezeigten Ausführungsform als Stange ausgebildet ist, gerade für relativ grosse Dimensionen aber auch in Form eines Rohrs vorliegen kann.

In demjenigen Bereich der Rotorwelle 34, der im montierten Zustand des Dünnschichtverdampfers 100 im Bereich des Einlassstutzens 20 liegt, ist eine Förderwendel 48 mit relativ grosser Steigung angeordnet. In Förderrichtung daran schliessen im Wesentlichen parallel zur Achsrichtung verlaufende Reihen 51 an auf dem Umfang des Rotorwellenkörpers 46 angeordnete Rotorblättern 50 in Form von Wischerblattelementen 500 an, welche bis in die Nähe der Gehäusemantelinnenwand reichen. In der gezeigten Ausführungsform sind vier solcher Reihen 51a, 51b, 51c, 51d ausgebildet, welche in Umfangsrichtung um jeweils 90° voneinander beabstandet sind.

Die Wischerblattelemente 500 sind schräg von der Drehrichtung DR weggerichtet. Konkret werden gemäss der in Fig. 2 gezeigten Ausführungsform mehrere in Achsrichtung aufeinanderfolgende Wischerblattelemente 500 durch von einer über Bolzen am Rotorwellenkörper 46 fixierten Befestigungsplatte 52 abstehende Zähne 54 gebildet. Diese weisen jeweils ein an die Befestigungsplatte anschliessendes proximales Teilstück 56 auf, welches schräg zur Befestigungsplatte ausgerichtet ist und in einer parallel zur Rotorachse A verlaufenden Ebene liegt. An diese proximalen Teilstücke 56 schliesst jeweils ein distales Teilstück 58 an, welches somit den radial aussenliegenden Endbereich des jeweiligen Rotorblatts 50 bzw. Wischerblattelements 500 bildet und in einer schräg zur Rotorachse A verlaufenden Ebene verläuft; die Unterkante und die Oberkante des distalen Teilstücks 58 verlaufen in der gezeigten Ausführungsform im Wesentlichen parallel zur Ebene der Befestigungsplatte 52.

In Betrieb wird das zu behandelnde, durch den Einlassstutzen 20 in die Behandlungskammer 16 eingeführte Material von der Förderwendel 48 erfasst und in Richtung zu den Wischerblattelementen 500 gefördert. Sobald das Material die obersten Wischerblattelemente 500a erreicht, wird es von diesen vor sich her geschoben und auf der Gehäusemantelinnenwand in dünner Schicht verteilt.

Durch den durch das distale Teilstück 58 der Wischerblattelemente 500 ausgebildeten Anstellwinkel wird dem zu fördernden Material eine Bewegungskomponente in Richtung zum Auslassstutzen 24 hin erteilt. Sobald das vom obersten Wischerblattelement 500a vor sich hergeschobene Material die untere Kante des Wischerblattelements erreicht, bleibt es als Wulst auf der Gehäusemantelinnenwand liegen. Die nachfolgenden Wischerblattelemente 500b erfassen nun ihrerseits den Wulst, zerschlagen diesen und schieben ihn weiter Richtung Auslassstutzen 24 usw., wodurch das Material letztendlich über die gesamte Länge der Behandlungskammer gefördert wird.

Am Rotorwellenkörper 46 sind zwischen den Wischerblattelementreihen Temperatursensoren 60 angeordnet. Diese erstrecken sich im Wesentlichen radial zur Rotorwelle 34 bzw. zum Rotorwellenkörper 46 und sind durch das distale Teilstück 58 des sich auf derselben Höhe befindenden Wischerblattelements hindurchgeführt. Derart kommt der radial äusserste temperaturfühlende Abschnitt 61 des Temperatursensors in Drehrichtung betrachtet vor dem jeweiligen Wischerblattelement 500 zu liegen, sodass im Betrieb sich der temperaturfühlende Abschnitt 61 in der vom Wischerblattelement erzeugten Bugwelle des Materials befindet.

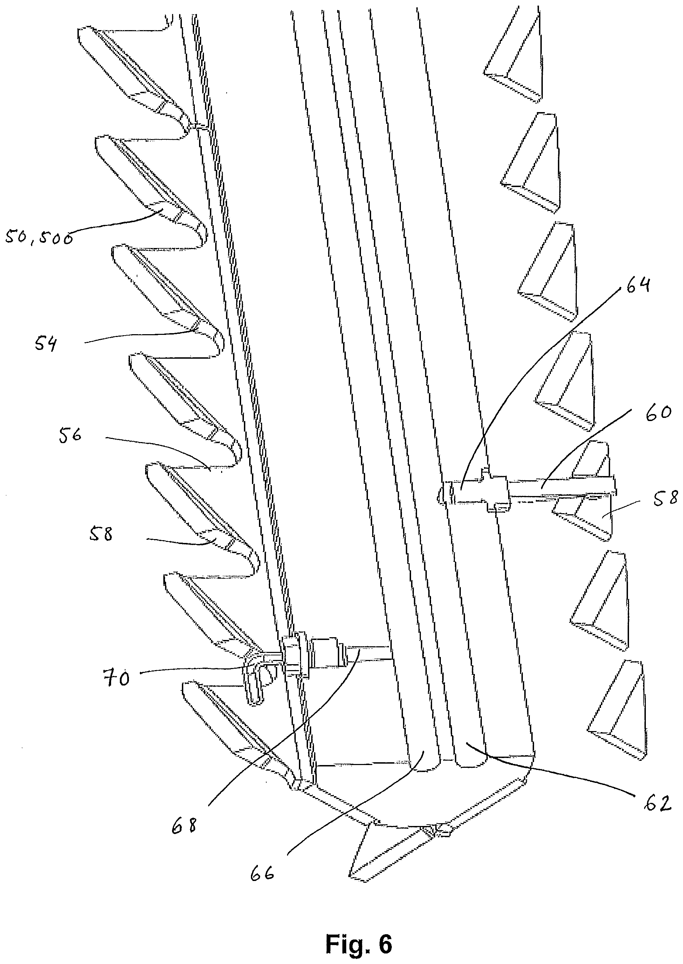

Zur Leitung des vom Temperatursensor 60 abgegriffenen Signals ist im Rotorwellenkörper 46 ein sich axial erstreckender Signalleitungskanal 62 ausgebildet, in welchen hierfür vorgesehene Temperatursensordurchgänge 64 münden, wie etwa aus der Fig. 6 ersichtlich ist. Wie aus der Fig. 6 weiter ersichtlich ist, ist im Rotorwellenkörper ein weiterer sich axial erstreckender Kanal 66 zum Einführen eines Schleppmittels ausgebildet. Von diesem Kanal führen Schleppmittelaustrittöffnungen 68 radial durch den Rotorwellenkörper 46 in entsprechende Rohrfortsätze 70, welche ebenfalls zwischen den Wischerblattelementreihen angeordnet sind.

Durch den Signalleitungskanal 62 führen Leitungen zu einer Schleifringanordnung 42 mit rotierenden, der Rotorwelle 34 zugeordneten Schleifringen 74a und stationären, der Statorbuchse 40 zugeordneten Schleifringen 74b. Das mittels der Schleifringanordnung 42 übertragene Signal wird sodann über einen Kabelausgang 76 einem externen Verstärker und einer Auswerteanlage zugeführt.

Der Kanal 66 für das Schleppmittel erstreckt sich auch durch die Statorbuchse 40 hindurch und ist mit einer Schleppmittelzuleitung 44, welche über einen entsprechenden Flansch 43 verfügt, strömungsverbunden.

Aufgrund der von den einzelnen Temperatursensoren 60 ermittelten lokalen Temperatursignale kann ein Temperaturprofil erstellt werden, welches es einerseits erlaubt, die Temperierung der Gehäusemantelwand gezielt einzustellen. Dies kann etwa durch entsprechende Einstellung der Temperatur und des Durchsatzes des die Leitspirale durchströmenden Wärmeträgermediums erfolgen.

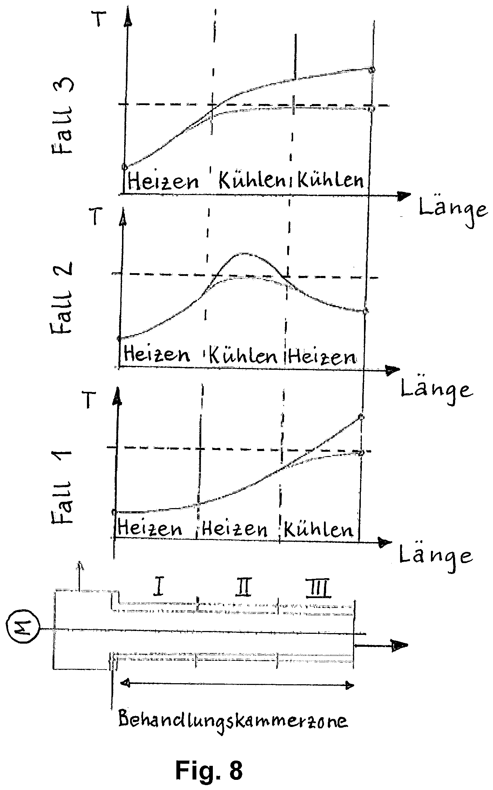

Drei exemplarische Temperaturverläufe, die eine unterschiedliche Führung der Temperierung erfordern, sind in Fig. 8 gezeigt. Dabei sind innerhalb der den jeweiligen Temperaturverlauf wiedergebenden Diagramme auch die entsprechenden Behandlungskammerzonen des Dünnschichtverdampfers wiedergegeben, wobei drei Zonen unterschieden werden: eine einlassseitige Behandlungskammerzone I, eine mittlere Behandlungskammerzone II und eine auslassseitige Behandlungskammerzone III. Im Übrigen ist in allen drei Fällen die maximal zulässige Grenztemperatur wiedergegeben, ab deren Überschreitung das Produkt Schaden nehmen kann.

In den Fällen a) und c) wird die höchste Temperatur jeweils in der auslassseitigen Behandlungskammerzone III erreicht, während im Fall b) das Temperaturmaximum innerhalb der mittleren Behandlungskammerzone II entsteht. Fall b) kann z.B. dann auftreten, wenn der Viskositätsanstieg durch abnehmenden Gehalt an flüchtigen Bestandteilen stärker ausgeprägt ist als die Viskositätsminderung durch Erwärmung.

Durch gezielte Kühlung des Wärmeträgermediums bzw. entsprechende Temperierung der Gehäusemantelwand kann die Temperatur des Materials derart beeinflusst werden, dass die maximal zulässige Temperatur nicht überschritten wird.

### Bezugszeichenliste

- 10; 100: Dünnschichtbehandlungsvorrichtung; Dünnschichtverdampfer
- 12: Gehäuse
- 14: Gehäusemantel
- 14a, 14b: Gehäusemantelsegmente
- 16: Behandlungskammer
- 18: Einlassbereich
- 20: Einlassstutzen
- 22: Auslassbereich
- 24: Auslassstutzen
- 26: Austragskonus
- 27: Brüdenstutzen
- 28a, b: Wärmeträgereinlass
- 30a, b: Wärmeträgerauslass
- 32: Hydraulikantrieb
- 34: Rotorwelle
- 36: Laterne
- 38: Hilfsaggregat
- 40: Statorbuchse
- 42: Schleifringanordnung
- 43: Flansch
- 44: Schleppmittelzuleitung
- 45: Schauglas
- 46: Rotorwellenkörper
- 48: Förderwendel
- 50; 500: Rotorblatt; Wischerblattelement
- 52: Befestigungsplatte
- 54: Zahn
- 56: proximales Teilstück
- 58: distales Teilstück
- 60: Temperatursensoren
- 61: temperaturfühlender Abschnitt
- 62: Signalleitungskanal
- 64: Temperatursensordurchgänge
- 66: Kanal zum Einführen eines Schleppmittels
- 68: Schleppmittelaustrittöffnungen
- 70: Rohrfortsätze
- 74a: rotierende Schleifringe
- 74b: stationäre Schleifringe
- 76: Kabelausgang
- A: Rotorachse
- DR: Drehrichtung

## Patentansprüche

1. Dünnschichtbehandlungsvorrichtung (10) zum Behandeln von viskosem Material umfassend
ein Gehäuse (12) mit einem beheizbaren und/oder kühlbaren Gehäusemantel (14), welcher eine sich in axialer Richtung erstreckende rotationssymmetrische Behandlungskammer (16) umschliesst,
einen in einem Einlassbereich (18) des Gehäuses (12) angeordneten Einlassstutzen (20) zum Einführen des zu behandelnden Materials in die Behandlungskammer (16),
einen in einem Auslassbereich (22) des Gehäuses (12) angeordneten Auslassstutzen (24) zum Austragen des Materials aus der Behandlungskammer (16), und
eine in der Behandlungskammer (16) angeordnete und sich koaxial erstreckende, antreibbare Rotorwelle (34) zur Erzeugung eines Materialfilms auf der Innenfläche des Gehäusemantels (14) und zur Förderung des Materials in Richtung vom Einlassbereich (18) zum Auslassbereich (22) hin, wobei die Rotorwelle (34) einen zentralen Rotorwellenkörper (46) und auf dessen Umfang angeordnete Rotorblätter (50) umfasst, deren radial äusserstes Ende von der Innenfläche des Gehäusemantels beabstandet ist,
**dadurch gekennzeichnet, dass** in der Behandlungskammer (16) mehr als zwei Temperatursensoren (60) zur Messung der Temperatur des Materialfilms vorliegen, welche über die Länge der Behandlungskammer verteilt angeordnet sind, und mindestens ein Teil der Temperatursensoren (60) an der Rotorwelle derart angeordnet ist, dass ein temperaturfühlender Abschnitt (61) des Temperatursensors (60) im Bereich des radial äussersten Endes der Rotorwelle (34) auf der Bugseite eines Rotorblatts (50; 500) angeordnet ist.

2. Dünnschichtbehandlungsvorrichtung nach Anspruch 1, **dadurch gekennzeichnet, dass** sie zur thermischen Auftrennung eines Stoffgemischs ausgelegt ist, und insbesondere in Form eines Dünnschichtverdampfers (100), eines Dünnschichttrockners oder eines Dünnschichtreaktors vorliegt, vorzugsweise in Form eines Dünnschichtverdampfers (100).

3. Dünnschichtbehandlungsvorrichtung nach einem der vorhergehenden Ansprüche, **dadurch gekennzeichnet, dass** dem mindestens einen Temperatursensor (60) eine Signalleitung zugeordnet ist zur Leitung des mit dem Temperatursensor ermittelten Signals zu einer externen Signalverarbeitungsvorrichtung.

4. Dünnschichtbehandlungsvorrichtung nach einem der vorhergehenden Ansprüche, **dadurch gekennzeichnet, dass** mindestens ein Teil der Temperatursensoren (60) am Rotorwellenkörper (46) angeordnet ist.

5. Dünnschichtbehandlungsvorrichtung nach Anspruch 4, **dadurch gekennzeichnet, dass** mindestens ein Teil der Temperatursensoren (60) in einem Bereich der Rotorwelle (34) angeordnet ist, an welchem sie während des Betriebs der Dünnschichtbehandlungsvorrichtung (10) in direktem Kontakt mit dem Materialfilm sind.

6. Dünnschichtbehandlungsvorrichtung nach einem der vorhergehenden Ansprüche, **dadurch gekennzeichnet, dass** mindestens ein Teil der Rotorblätter in Form von Wischerblattelementen ausgebildet ist, die mindestens in ihrem der Innenfläche des Gehäusemantels (14) zugewandten Randbereich einen Anstellwinkel in Bezug zur Rotorachse (A) ausbilden.

7. Dünnschichtbehandlungsvorrichtung nach einem der Ansprüche 5 bis 6, **dadurch gekennzeichnet, dass** die Signalleitung mindestens teilweise durch einen sich axial erstreckenden Signalleitungskanal (62) im Rotorwellenkörper (46) hindurchgeführt ist.

8. Dünnschichtbehandlungsvorrichtung nach einem der vorhergehenden Ansprüche, **dadurch gekennzeichnet, dass** im Innern des Gehäusemantels (14) ein Gehäusemantelhohlraum ausgebildet ist, welcher dazu bestimmt sind, zum Zwecke der Beheizung und/oder Kühlung von einem Wärmeträgermedium durchströmt zu werden.

9. Dünnschichtbehandlungsvorrichtung nach einem der vorhergehenden Ansprüche, **dadurch gekennzeichnet, dass** der Gehäusemantel (14) mindestens zwei Gehäusemantelsegmente (14a, 14b) umfasst, welche derart ausgestaltet sind, um unabhängig voneinander beheizt und/oder gekühlt zu werden.

10. Dünnschichtbehandlungsvorrichtung nach einem der vorhergehenden Ansprüche, **dadurch gekennzeichnet, dass** die Gehäusemantelsegmente (14a, 14b) jeweils eine entsprechende Behandlungskammerzone umschliessen und die Temperatursensoren (60) auf verschiedene Behandlungskammerzonen verteilt sind.

11. Dünnschichtbehandlungsvorrichtung nach einem der Ansprüche 5 bis 10, **dadurch gekennzeichnet, dass** der Rotorwelle (34) eine ausserhalb der Behandlungskammer (16) angeordnete Schleifringanordnung (42) zugeordnet ist zur Übermittlung des durch den Rotorwellenkörper (46) hindurch geleiteten Signals an eine Auswerteeinheit.

12. Dünnschichtbehandlungsvorrichtung nach einem der vorhergehenden Ansprüche, **dadurch gekennzeichnet, dass** im Rotorwellenkörper (46) ein sich axial erstreckender Kanal (66) zum Einführen eines Stoffes, insbesondere eines Schleppmittels, vorgesehen ist.

13. Dünnschichtbehandlungsvorrichtung nach einem der vorhergehenden Ansprüche, **dadurch gekennzeichnet, dass** mindestens in demjenigen Bereich bzw. in einem derjenigen Bereiche der Dünnschichtbehandlungsvorrichtung, in dem/denen ein Temperatursensor (60) angeordnet ist, ein Wärmeträgertemperatursensor im entsprechenden Bereich des Gehäusemantels (14) angeordnet ist.

## Claims

1. Thin-film treatment apparatus (10) for treating viscous material, comprising
a housing (12) having a heatable and/or coolable housing shell (14), which encloses a rotationally symmetric treatment chamber (16) extending in an axial direction,
an inlet port (20), arranged in an inlet region (18) of the housing (12), for feeding the material to be treated into the treatment chamber (16),
an outlet port (24), arranged in an outlet region (22) of the housing (12), for discharging the material from the treatment chamber (16), and
a coaxially extending, drivable rotor shaft (34), arranged in the treatment chamber (16), for producing a material film on the inner surface of the housing shell (14) and for conveying the material in the direction away from the inlet region (18) towards the outlet region (22), wherein the rotor shaft (34) comprises a central rotor shaft body (46) and rotor blades (50) arranged on the circumference thereof, the radially outermost end of said rotor blades being spaced apart from the inner surface of the housing shell,
**characterized in that** the treatment chamber (16) contains more than two temperature sensors (60) for measuring the temperature of the material film, which are arranged distributed over the length of the treatment chamber, and at least a part of the temperature sensors (60) is arranged on the rotor shaft such that a temperature-sensing portion (61) of the temperature sensor (60) is arranged in the region of the radially outermost end of the rotor shaft (34), on the bow side of a rotor blade (50; 500).

2. Thin-film treatment apparatus according to Claim 1, **characterized in that** it is designed for the thermal separation of a substance mixture, and is present, in particular, in the form of a thin-film evaporator (100), a thin-film dryer or a thin-film reactor, preferably in the form of a thin-film evaporator (100).

3. Thin-film treatment apparatus according to either of the preceding claims, **characterized in that** the at least one temperature sensor (60) is assigned a signal line for conducting the signal ascertained with the temperature sensor to an external signal processing apparatus.

4. Thin-film treatment apparatus according to one of the preceding claims, **characterized in that** at least a part of the temperature sensors (60) is arranged on the rotor shaft body (46).

5. Thin-film treatment apparatus according to Claim 4, **characterized in that** at least a part of the temperature sensors (60) is arranged in a region of the rotor shaft (34) where they are in direct contact with the material film during the operation of the thin-film treatment apparatus (10).

6. Thin-film treatment apparatus according to one of the preceding claims, **characterized in that** at least a part of the rotor blades is configured in the form of wiper blade elements which, at least in their peripheral region facing the inner surface of the housing shell (14), form an angle of inclination in relation to the rotor axis (A).

7. Thin-film treatment apparatus according to one of Claims 5 to 6, **characterized in that** the signal line is at least partially guided through an axially extending signal line duct (62) in the rotor shaft body (46).

8. Thin-film treatment apparatus according to one of the preceding claims, **characterized in that** a housing shell cavity, which is intended to be flowed through by a heat carrier medium for heating and/or cooling purposes, is formed in the interior of the housing shell (14) .

9. Thin-film treatment apparatus according to one of the preceding claims, **characterized in that** the housing shell (14) comprises at least two housing shell segments (14a, 14b), which are designed so as to be heated and/or cooled independently of one another.

10. Thin-film treatment apparatus according to one of the preceding claims, **characterized in that** the housing shell segments (14a, 14b) respectively enclose a corresponding treatment chamber zone, and the temperature sensors (60) are distributed among various treatment chamber zones.

11. Thin-film treatment apparatus according to one of Claims 5 to 10, **characterized in that** the rotor shaft (34) is assigned a slip ring arrangement (42), arranged outside the treatment chamber (16), for transmitting the signal conducted through the rotor shaft body (46) to an evaluation unit.

12. Thin-film treatment apparatus according to one of the preceding claims, **characterized in that** an axially extending duct (66) for the introduction of a substance, in particular of an entrainer, is provided in the rotor shaft body (46).

13. Thin-film treatment apparatus according to one of the preceding claims, **characterized in that**, at least **in that** region or in one of those regions of the thin-film treatment apparatus in which a temperature sensor (60) is arranged, a heat carrier temperature sensor is arranged in the corresponding region of the housing shell (14) .

## Revendications

1. Dispositif de traitement de couche mince (10) permettant de traiter des matières visqueuses, comprenant
un boîtier (12) doté d'une enveloppe de boîtier (14) pouvant être chauffée et/ou refroidie et qui entoure une chambre de traitement (16) à symétrie de révolution et s'étendant dans la direction axiale,
un raccord d'entrée (20) disposé dans une zone d'entrée (18) du boîtier (12) permettant d'introduire la matière à traiter dans la chambre de traitement (16),
un raccord de sortie (24) disposé dans une zone de sortie (22) du boîtier (12) permettant d'évacuer la matière de la chambre de traitement (16), et
un arbre de rotor (34) pouvant être entraîné, disposé dans la chambre de traitement (16) et s'étendant coaxialement, permettant de générer une couche de matière sur la surface intérieure de l'enveloppe de boîtier (14) et permettant d'acheminer la matière dans la direction de la zone d'entrée (18) à la zone de sortie (22), l'arbre de rotor (34) comprenant un corps d'arbre de rotor central (46) et des pales de rotor (50) disposées sur la circonférence de celui-ci et dont l'extrémité radialement la plus extérieure est éloignée de la surface intérieure de l'enveloppe de boîtier,
**caractérisé en ce que** dans la chambre de traitement (16), plus de deux capteurs de température (60) sont présents pour mesurer la température de la couche de matière, qui sont disposés en étant répartis sur la longueur de la chambre de traitement, et au moins une partie des capteurs de température (60) est disposée sur l'arbre de rotor de telle sorte qu'une section (61) de détection de température du capteur de température (60) est disposée dans la zone de l'extrémité radialement la plus extérieure de l'arbre de rotor (34) à l'avant d'une pale de rotor (50 ; 500).

2. Dispositif de traitement de couche mince selon la revendication 1, **caractérisé en ce qu'**il est conçu pour la séparation thermique d'un mélange de substances, et se présente en particulier sous la forme d'un évaporateur à couche mince (100), d'un sécheur à couche mince ou d'un réacteur à couche mince, de préférence sous la forme d'un évaporateur à couche mince (100).

3. Dispositif de traitement de couche mince selon l'une quelconque des revendications précédentes, **caractérisé en ce qu'**une ligne de signalisation est associée audit au moins un capteur de température (60) pour conduire le signal déterminé à l'aide du capteur de température à un dispositif de traitement de signal externe.

4. Dispositif de traitement de couche mince selon l'une quelconque des revendications précédentes, **caractérisé en ce qu'**au moins une partie des capteurs de température (60) est disposée sur le corps d'arbre de rotor (46).

5. Dispositif de traitement de couche mince selon la revendication 4, **caractérisé en ce qu'**au moins une partie des capteurs de température (60) est disposée dans une zone de l'arbre de rotor (34) au niveau de laquelle ils sont en contact direct avec la couche de matière pendant le fonctionnement du dispositif de traitement de couche mince (10).

6. Dispositif de traitement de couche mince selon l'une quelconque des revendications précédentes, **caractérisé en ce qu'**au moins une partie des pales de rotor est réalisée sous la forme d'éléments de lame de balayage qui réalisent au moins dans leur zone marginale tournée vers la surface intérieure de l'enveloppe de boîtier (14) un angle d'incidence par rapport à l'axe de rotor (A).

7. Dispositif de traitement de couche mince selon l'une quelconque des revendications 5 à 6, **caractérisé en ce que** la ligne de signalisation est guidée au moins partiellement à travers un passage de ligne de signalisation (62) s'étendant axialement dans le corps d'arbre de rotor (46).

8. Dispositif de traitement de couche mince selon l'une quelconque des revendications précédentes, **caractérisé en ce qu'**à l'intérieur de l'enveloppe de boîtier (14), une cavité d'enveloppe de boîtier est réalisée qui est destinée à être traversée par un fluide caloporteur en vue du chauffage et/ou du refroidissement.

9. Dispositif de traitement de couche mince selon l'une quelconque des revendications précédentes, **caractérisé en ce que** l'enveloppe de boîtier (14) comprend au moins deux segments d'enveloppe de boîtier (14a, 14b) qui sont conçus pour être chauffés et/ou refroidis indépendamment l'un de l'autre.

10. Dispositif de traitement de couche mince selon l'une quelconque des revendications précédentes, **caractérisé en ce que** les segments d'enveloppe de boîtier (14a, 14b) entourent respectivement une zone de chambre de traitement correspondante, et les capteurs de température (60) sont répartis sur différentes zones de chambre de traitement.

11. Dispositif de traitement de couche mince selon l'une quelconque des revendications 5 à 10, **caractérisé en ce qu'**un agencement de bague collectrice (42), disposée à l'extérieur de la chambre de traitement (16), est associée à l'arbre de rotor (34) pour transmettre à une unité d'évaluation un signal conduit à travers le corps d'arbre de rotor (46).

12. Dispositif de traitement de couche mince selon l'une quelconque des revendications précédentes, **caractérisé en ce qu'**un passage (66) s'étendant axialement pour introduire une substance, en particulier un agent entraîneur, est prévu dans le corps d'arbre de rotor (46).

13. Dispositif de traitement de couche mince selon l'une quelconque des revendications précédentes, **caractérisé en ce qu'**au moins dans la zone ou dans l'une des zones du dispositif de traitement de couche mince dans laquelle/lesquelles est disposé un capteur de température (60), un capteur de température d'agent caloporteur est disposé dans la zone correspondante de l'enveloppe de boîtier (14).
